(19)

Europäisches
Patentamt
European
Patent Office
Office européen
des brevets

(11)  **EP 2 477 210 A1**

(12)  # EUROPEAN PATENT APPLICATION
published in accordance with Art. 153(4) EPC

(43) Date of publication:
**18.07.2012   Bulletin 2012/29**

(21) Application number: **10813827.2**

(22) Date of filing: **06.09.2010**

(51) Int Cl.:
*H01J 63/06* (2006.01)       *H01J 61/44* (2006.01)

(86) International application number:
**PCT/JP2010/065214**

(87) International publication number:
**WO 2011/027881 (10.03.2011 Gazette 2011/10)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority:  **07.09.2009  JP 2009206052**

(71) Applicants:
  • **National University Corporation
    Nagoya Institute of Technology
    Showa-ku
    Nagoya-shi
    Aichi 466-0061 (JP)**
  • **Tokuyama Corporation
    Shunan-shi, Yamaguchi-ken 745-8648 (JP)**
  • **Tohoku University
    Sendai-shi, Miyagi 980-8577 (JP)**

(72) Inventors:
  • **ONO, Shingo
    Nagoya-shi
    Aichi 466-0061 (JP)**
  • **SUYAMA, Toshihisa
    Shunan-shi
    Yamaguchi 745-8648 (JP)**

  • **FUKUDA, Kentaro
    Shunan-shi
    Yamaguchi 745-8648 (JP)**
  • **ISHIZU, Sumito
    Shunan-shi
    Yamaguchi 745-8648 (JP)**
  • **KAWAGUCHI, Noriaki
    Shunan-shi
    Yamaguchi 745-8648 (JP)**
  • **NAGAMI, Tomohito
    Shunan-shi
    Yamaguchi 745-8648 (JP)**
  • **YOSHIKAWA, Akira
    Sendai-shi
    Miyagi 980-8577 (JP)**
  • **YANAGIDA, Takayuki
    Sendai-shi
    Miyagi 980-8577 (JP)**
  • **YOKOTA, Yui
    Sendai-shi
    Miyagi 980-8577 (JP)**

(74) Representative: **Jackson, Martin Peter
    J A Kemp
    14 South Square
    Gray's Inn
    London WC1R 5JJ (GB)**

(54)  **DEVICE FOR EMITTING VACUUM ULTRAVIOLET LIGHT**

(57)    [Problems to be Solved] The present invention aims to provide a novel light emitting device for ultraviolet light, in particular for vacuum ultraviolet light, which has rectified the drawbacks of the ultraviolet light emitting apparatus in current use, namely, the problems that the apparatus is large in size, consumes high power, is short in life, and has unstable strength.

[Means to Solve the Problems] A vacuum ultraviolet light emitting device comprising: a luminescence substrate which is composed of a transparent substrate of lithium fluoride, magnesium fluoride, calcium fluoride, barium fluoride or the like, and a metal fluoride thin-film layer formed on the transparent substrate and being a thin-film layer of a metal fluoride such as $LuLiF_4$, $LaF_3$, $BaF_2$ or $CaF_2$, the metal fluoride being doped with atoms of neodymium (Nd), thulium (Tm), erbium (Er) or the like; and an electron beam source such as a thermionic emission gun or a field emission gun, wherein the luminescence substrate and the electron beam source are disposed in a vacuum atmosphere, and the metal fluoride thin-film layer is irradiated with electron beams from the electron beam source to emit light including wavelength components of vacuum ultraviolet light.

**(Cont. next page)**

EP 2 477 210 A1

# Fig. 1

**Description**

Technical Field:

This invention relates to a vacuum ultraviolet light emitting device which emits vacuum ultraviolet light by utilizing electrons released from an electron beam source.

Background Art:

Ultraviolet light is generally called ultraviolet radiation, and is widely used in illumination, pest control, curing of resins, and so on. Recently, there has been a growing interest, particularly, in deep ultraviolet light with a wavelength of 200 to 350 nm or vacuum ultraviolet light with a wavelength of 200 nm or less.
Deep ultraviolet light is expected to find use in fields such as sterilization and water purification, various medical fields, the field of high density recording, the field of high color rendering light-emitting diode illumination, and the field of environmental pollutant decomposition coupled with photocatalysts. Vacuum ultraviolet light is expected to be' applied to the field of decomposition of hazardous substances due to the generation of ozone.
As light sources of these types of ultraviolet light, however, practical use has been made only of ultraviolet lasers mediated by a gas or a solid, such as excimer lasers and various SHG lasers (second harmonic lasers) ; and gas lamps such as excimer lamps and low pressure mercury lamps. They are large in size, short in life, and high in cost, and they are thus difficult of general application. Hence, a demand has been intense for the development of an ultraviolet light source which is compact, inexpensive, highly efficient, and long-lived.
Currently, a deep ultraviolet high intensity light emitting diode and a deep ultraviolet laser diode using an aluminum gallium nitride-based semiconductor material are under development. This material is characterized, for example, by having a luminescence region in the 200 to 360 nm band, being capable of high efficiency luminescence, and providing a long device life. However, high quality crystals of aluminumnitride, which serve as an underlying substrate for a luminous element, have hitherto been unproducible. Thus, conventional products have been still unsatisfactory in luminous efficiency, and a high brightness deep ultraviolet light emitting diode has not been achieved.
Moreover, a method which comprises irradiating high purity hexagonal boron nitride with electron beams to emit deep ultraviolet light at 215 nm is known (Patent Document 1). This technology is limited in light emitting material, thus posing, for example, the problem that ultraviolet light with a wavelength in the vicinity of 260 nm, or vacuum ultraviolet light, which is useful for sterilization, cannot be emitted. On the other hand, a report has been issued on the luminescence behavior of lithium calcium aluminum fluoride containing a cerium element (Ce:

$LiCaAlF_6$) upon irradiation with electron beams, and this compound is described as emitting deep ultraviolet light at 290 nm and 310 nm (Non-Patent Document 1), but there is no description therein of vacuum ultraviolet light. In each of these documents, massive crystals are used as light emitting materials. Therefore, the problems have been posed that emitted light is absorbed by the light emitting material itself, and it is difficult to reduce the thickness and weight of the resulting product. Besides, it has not been easy to produce a device having a large area and emitting light uniformly.

Prior Art Documents:

Patent Documents:

    Patent Document 1: JP-A-2005-228886

Non-Patent Documents:

    Non-Patent Document 1: Y. Suzuki et al., "Hybrid time-resolved spectroscopic system for evaluating laser material using a table-top-sized, low-jitter, 3-MeV picoseconds electron-beam source with a photocathode" Applied Physics Letters 2002, 80, p3280-3282

Summary of the Invention:

Problems to be solved by the invention:

It is an object of the present invention to provide a novel light emitting device for ultraviolet light, in particular for vacuum ultraviolet light, which has rectified the drawback of the ultraviolet light emitting apparatus in current use, namely, the problem that the apparatus is large in size, consumes high power, is short in life, and has unstable strength.

Means for solving the problems:

The present inventors have conducted studies on the vacuum ultraviolet light emitting (i.e., luminescence) characteristics of various materials in the light of the above-mentioned circumstances. As a result, they have found that a material obtained by converting a metal fluoride into a thin film can serve as a luminescent material which facilitates the thickness reduction and weight reduction of a vacuum ultraviolet light emitting device, without allowing the luminescent material itself to absorb vacuum ultraviolet light due to electron irradiation. This finding has led them to accomplish the present invention.
According to the present invention, there is provided a vacuum ultraviolet light emitting device comprising a luminescence substrate and an electron beam source, the luminescence substrate being composed of a transparent substrate and a metal fluoride thin-film layer formed on the transparent substrate, wherein the luminescence substrate and the electron beam source are disposed in a vacuum atmosphere, and the metal fluoride thin-film layer is irradiated with electron beams from the electron beam source to emit light including wavelength components of vacuum ultraviolet light.

In the vacuum ultraviolet light emitting device, it is preferred that the metal fluoride thin-film layer be a thin-film layer composed of a metal fluoride containing atoms of at least one metal selected from the group consisting of Nd, Tm and Er.

Effects of the invention:

According to the present invention, there can be provided a novel light emitting device for vacuum ultraviolet light which is compact, consumes low power, and does not require a complicated structure. Because of its high photolytic performance, this device can perform decomposition of hazardous substances, dry cleaning, surface modification of polymeric materials, etc., and can be used preferably in fields such as biotechnology, medical care, sanitation, environment, and nanotechnology. Since the thin-film layer is used as a luminescence layer, moreover, the device is constructible as a light emitting device which can be designed with a high degree of freedom ensuring a large area and various shapes, as compared with conventional devices using massive crystals. The device can also be incorporated into a line which requires mass production. Hence, the device is greatly useful in industrial fields such as dry cleaning of semiconductor substrate.

Brief Description of the Drawings:

[Fig. 1] is a schematic structural view of a vacuum ultraviolet light emitting device according to the present invention.
[Fig. 2] is a schematic structural view of another example of the vacuum ultraviolet light emitting device according to the present invention.
[Fig. 3] is a schematic structural view of still another example of the vacuum ultraviolet light emitting device according to the present invention.
[Fig. 4] is a schematic structural view of a further example of the vacuum ultraviolet light emitting device according to the present invention.
[Fig. 5] is a schematic view of a pulse laser deposition apparatus.
[Fig. 6] is the emission spectrum of a light emitting device prepared in Example 1.
[Fig. 7] is the emission spectrum of a light emitting device prepared in Example 2.

[Fig. 8] is the emission spectrum of a light emitting device prepared in Example 3.

Mode for Carrying Out the Invention:

The vacuum ultraviolet light emitting device of the present invention is basically configured with a luminescence substrate and an electron beam source, the luminescence substrate being composed of a transparent substrate and a metal fluoride thin-film layer formed on the transparent substrate. The luminescence substrate and the electron beam source need to be of a structure disposed in a vacuum atmosphere.

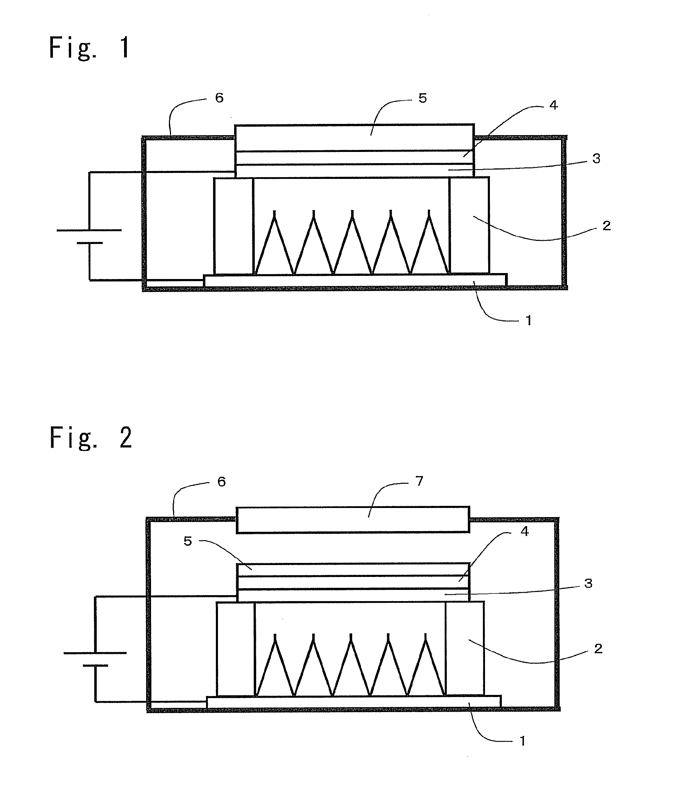

Fig. 1 shows, in a schematic view, the basic structure of this vacuum ultraviolet light emitting device. The luminescence substrate is composed of a transparent substrate 5 and a metal fluoride thin film 4 formed on the transparent substrate. An electron beam source 1, an anode 3 to be described later, the metal fluoride thin film 4, and the transparent substrate 5 are arranged in this order to form a light emitting device. In Fig. 1, the transparent substrate 5 concurrently serves as a window member of a vacuum container 6 of the vacuum ultraviolet light emitting device according to the present invention. As in Fig. 2, however, a window member 7 may be separately provided in place of the transparent substrate 5, and the luminescence substrate composed of the transparent substrate 5 and the metal fluoride thin-film layer 4 formed on the transparent substrate 5 may be installed within the vacuum container 6 of the vacuum ultraviolet light emitting device according to the present invention.

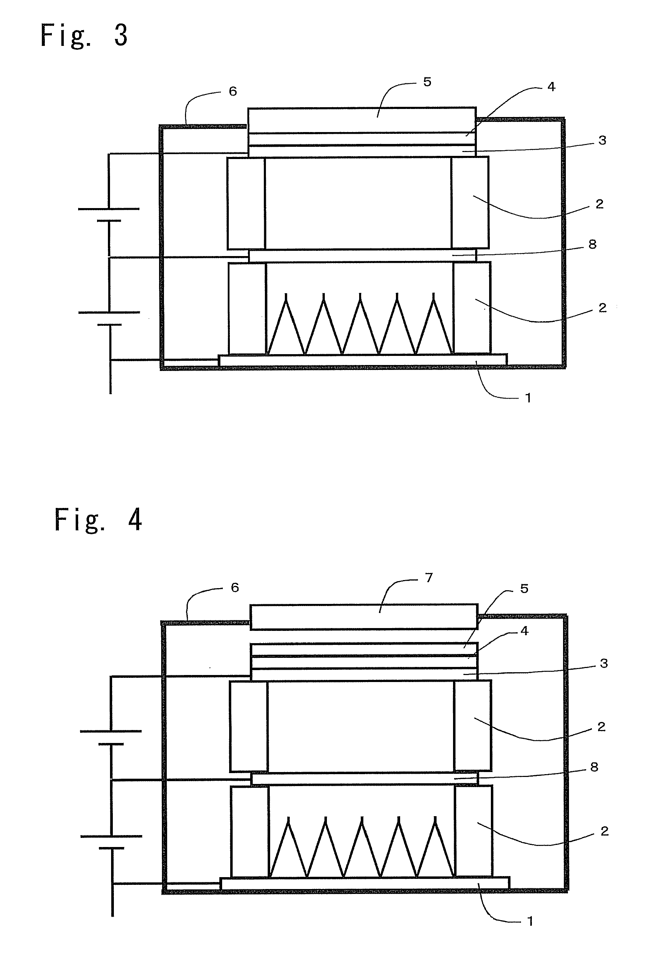

As shown in Figs. 3 and 4, moreover, an extraction electrode 8 may be installed between the electron beam source 1 and the anode 3. On this occasion, the anode 3 works as an accelerating electrode for further accelerating electrons which have been extracted from the electron beam source 1 and accelerated by the extraction electrode 8.

The transparent substrate 5 needs to be pervious to vacuum ultraviolet light generated from the metal fluoride thin-film layer 4 by irradiation with the electrons. The transparent substrate 5 also acts as a substrate for formation and retention of the metal fluoride thin film. With the structures shown in Figs. 1 and 3, the transparent substrate 5 also works as a window member. Examples of materials having such properties are lithium fluoride, magnesium fluoride, calcium fluoride and barium fluoride. Magnesium fluoride, in particular, is preferred in terms of perviousness.

The thickness of the transparent substrate 5 is not limited, but is preferably in the range of 0.1 to 20 mm from the viewpoints of strength and perviousness. Particularly when the transparent substrate 5 concurrently serves as the window member, its thickness is preferably in the range of 1 to 20 mm from the point of view of strength. If the window member is provided separately, its strength is not very necessary, and its preferred thickness is 0.1 to 1 mm. The area of the transparent substrate 5 is not limited, but depends on the area required of the metal fluoride thin-film layer 4 to be described later. The larger the thin-film layer 4 and the transparent substrate 5, the greater area the resulting light emitting device can have.

The metal fluoride thin-film layer 4 is formed on the transparent substrate 5. The electrons released from the electron beam source 1 are directed onto the thin-film layer 4 to emit vacuum ultraviolet light. Then, this vacuum ultraviolet light penetrates the transparent substrate 5 (if a window member is separately provided, the light further passes through the window member) and runs for irradiation outside the vacuum ultraviolet light emitting device of the present invention.

The metal fluoride constituting the metal fluoride thin film 4 is not limited, and any metal fluorides which emit vacuum ultraviolet light upon irradiation with electron beams can be used. Concrete examples are metal fluorides, such as $KMgF_3$, $KCaF_3$, $KYF_4$, $K_2YF_5$ and $KLuF_4$, which perform luminescence in the vacuum ultraviolet region at wavelengths of 140 to 200 nm, called core-valence (CV) luminescence. Further examples are metal fluorides, such as $NdF_3$, $TmF_3$, $ErF_3$, $KTmF_4$, $KErF_4$, $LiErF_4$, $LiTmF_4$, and $BaTm_2F_8$, which emit vacuum ultraviolet light at wavelengths of 160 to 200 nm owing to the 5d-4f transition of neodymium (Nd), thulium (Tm), erbium (Er), etc., and metal fluorides, such as $LaF_3$, $LuLiF_4$, $LuF_3$, $BaF_2$, $CaF_2$, $SrF_2$, $LiCaAlF_6$, $LiSrAlF_6$, $LiYF_4$, $BaY_2F_8$, $C_SY_2F_7$, $Na_{0\cdot4}Y_{0\cdot6}F_{2\cdot2}$, $LiKYF_5$, $KYF_4$, $KY_3F_{10}$, and $K_2YF_5$, which have been doped with Nd, Tm and Er.

The crystallinity of the metal fluoride thin-film layer 4 is not limited, and may be any of amorphous quality, polycrystalline quality, and monocrystalline quality. If containing (doped with) Nd or the like, however, the metal fluoride thin-film layer 4 is preferably polycrystalline or monocrystalline, because the doping element can act more easily as a luminescence center when the crystallinity is higher. From the viewpoint of a large area, the metal fluoride thin-film layer is preferably amorphous or polycrystalline.

The lower limit of the film thickness of the metal fluoride thin-film layer 4 is not limited. However, it is preferably an average of 100 nm or more in order to avoid a situation in which the film thickness of the resulting metal fluoride thin-film layer 4 becomes nonuniform and a portion with a noticeably small film thickness is formed. In terms of luminous efficiency, moreover, a thickness of 1 $\mu$m or more is preferred. The upper limit of the film thickness is arbitrary, but is preferably an average of less than 10 $\mu$m from the viewpoint of crystallinity maintenance and from the viewpoints of compactness, light weight, and reabsorption of emitted light. The area of the metal fluoride thin-film layer 4 formed is not limited, but advisably is of a value such that it is not so small as to make handling and anode formation difficult. Rather, an increased area makes it possible to carry out large-area luminescence, and the resulting device may require a large area.

The above-mentioned metal fluoride thin-film layer 4, even when formed as a single layer on the transparent substrate 5, enables the resulting composite to act as a luminescence substrate. It does not necessarily require a single-layered film, but can be formed as a multilayered film. For example, a certain buffer layer which eliminates lattice mismatch may be formed between the transparent substrate 5 and the metal fluoride thin-film layer 4, whereby the crystallinity of the metal fluoride thin-film layer 4 can be increased. Moreover, an antioxidant film may be formed on the outermost surface of the luminescence substrate (i.e., the vacuum ultraviolet light release surface side).

A method of preparing the metal fluoride thin-film layer 4 is not limited, and a publicly known crystal growth method can be used. Concretely, there can be employed a method, such as a pulse laser deposition process (laser ablation process); a molecular beam epitaxy process for growing crystals from a molecular material evaporated in a vacuum; liquid phase epitaxy in which a crystalline material is dissolved in a metal liquefied at a high temperature, and a substrate serving as a seed is placed in the solution, followed by cooling the solution, to grow crystals on the substrate; or a sputtering method. Alternatively, a thin-film layer comprising a metal fluoride powder may be employed. Of these methods, the pulse laser deposition process, a type of vapor phase growth, is preferred. The pulse laser deposition process is a physical vapor deposition process in which high energy is given to a raw material by laser pulse irradiation to sublimate and deposit the raw material on a substrate. This process is excellent in that a thin film with uniform optical properties can be easily prepared, thus resulting in uniform luminescence performance, in comparison with chemical vapor deposition in which the optical properties of the resulting thin film tend to become nonuniform.

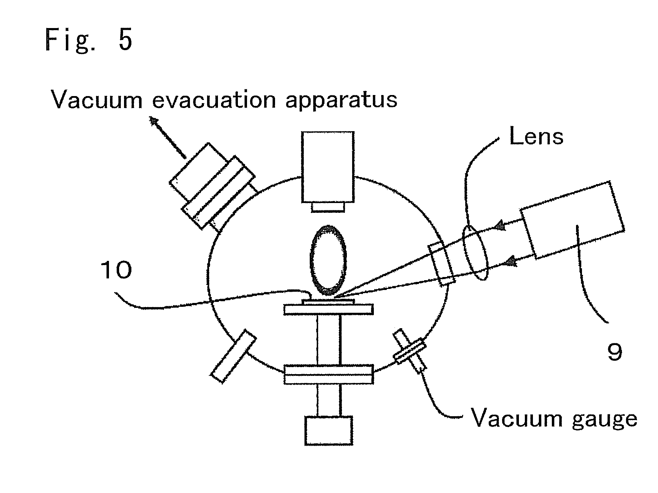

A concrete explanation for the formation of the metal fluoride thin-film layer 4 on the transparent substrate 5 will be offered in accordance with Fig. 5 by way of the pulse laser deposition process which is a typical vapor phase growth method. The pulse laser deposition process is one of the physical vapor deposition methods which utilize laser light as an energy source for raw material evaporation, and is called the laser ablation method. It is a film formation process in which high power pulse laser light is entered from a laser light source 9, focused and thrown onto the surface of a target 10, and instantaneous stripping (ablation) of a surface layer portion which occurs at this time is utilized to deposit the atoms, molecules, ions or their clusters of the constituent elements of the target on the transparent substrate 5. Monocrystals, polycrystals, molten solids, pellets, etc. of the aforementioned metal fluorides can be used as the target 10. Third harmonics of Nd: YAG laser, etc. can be used as the laser light source 9.

On the metal fluoride thin-film layer 4, the anode 3 is usually installed for extracting and accelerating electrons from the electron beam source. A metal sheet, a metal film, or a conductive metal oxide film can be used as the anode 3. Its film thickness is not limited, but is preferably 1 nm or more, because minimum required durability is ensured. From the point of view of size and weight reduction, a film thickness of 1000 $\mu$m or less is preferred. A plurality of metals or metal oxides may be used to form a multilayer film. Any publicly known metals or conductive oxides can be used as the material for the anode 3. Concretely, the material is composed of at least one of aluminum, titanium, nickel, cobalt, gold, silver, copper, chromium, and ITO (indium tin oxide).

The extraction electrode 8 may be installed between the electron beam source 1 and the anode 3. In this case, electrons are extracted from the electron beam source and accelerated by the extraction electrode 8, and the electrons are further accelerated by the anode 3. The extraction electrode 8 is spaced from the electron beam source 1 by a spacer 2, and is installed on the spacer 2. A metal sheet can be used as the extraction electrode 8. The sheet thickness is not limited, but is preferably 10 $\mu$m or more, because minimum required durability is ensured. From the point of view of size and weight reduction, a sheet thickness of 1000 $\mu$m or less is preferred. Any publicly known metals or conductive oxides can be used as the material for the extraction electrode 8. Concretely, the material is composed of at least one of aluminum, titanium, nickel, cobalt, gold, silver, copper, chromium, and ITO (indium tin oxide).

As a method for forming the metal film or metal oxide film on the metal fluoride thin-film layer 4, a publicly known metal film forming technology can be used arbitrarily. Concretely, vacuum evaporation can be used. Vacuum evaporation is a process in which an evaporation material is sublimated or evaporated in a vacuum by heating to produce particles, which are deposited on a substrate to form a uniform filmy sample. By using a shield called a mask, portions on which the evaporation material is not to be deposited can be shielded, and the anode 3 of an arbitrary shape can be formed. By machining the metal sheet, moreover, it can be formed into a desired shape to produce the anode 3.

There are no particular limitations on the shapes of the anode and the extraction electrode. However, the anode 3 and the extraction electrode 8 need to be passed through by electron beams, which should arrive at the metal fluoride thin-film layer 4. Thus, they are preferably mesh-shaped or slit-shaped positive electrodes. If they are an anode and an extraction electrode without clearances, the electron beams ejected from the electron beam source are all trapped by the anode 3 and the extraction electrode 8, resulting in the failure to emit light. The anode 3 may be formed on a surface of the transparent substrate 5 opposite to the surface thereof on which the metal fluoride thin-film layer 4 is formed. In this case, there is need to apply to the anode 3 a higher voltage than that when the anode 3 is formed on the metal fluoride thin-film layer 4.

[0025] - The electron beams for emitting vacuum ultraviolet light are projected from the electron beam source 1. As this electron beam source 1, use is made of a publicly known tool using a tungsten filament, a lanthanum boride (LaB$_6$) filament, or the like, such as a thermionic emission gun utilizing electrons which are released when a metal is heated to a high temperature; or a field emission gun (field emitter) utilizing electrons which are released by applying an electric field to the surface of a solid such as carbon nanotube, diamond or silicon. Preferred as the electron beam source is the field emitter, because it does not generate heat, requires a low voltage and saves power, and can be constructed thin. If the electron beam source 1 is the field emitter, the field emitter itself serves as a cathode.

The above-mentioned luminescence substrate and field emitter need to be disposed in a vacuum atmosphere. If the degree of vacuum is low, the field emitter tends to be sputtered and deteriorated. Thus, it is preferred to create a degree of vacuum enough to cause no sputtering. In the presence of a vacuum atmosphere, a gas which absorbs vacuum ultraviolet light, such as oxygen, is removed. Therefore, vacuum ultraviolet light emitted from the luminescence substrate can be efficiently projected for irradiation outside the vacuum ultraviolet light emitting device. Concretely, the luminescence substrate and the electron beam source 1 are installed within the vacuum container 6, and the interior of the vacuum container 6 is preferably brought into a vacuum of preferably 1 Pa or less, more preferably $1 \times 10^{-3}$ Pa or less.

If the field emitter is used as the electron beam source 1, it is advisable, for example, that a voltage of 100 V to 10 kV at an electron density of 1 to 100 mA be applied between the field emitter and the anode 3, although the voltage differs according to the material for the field emitter, the shape of the field emitter, spacing between the field emitter and the anode, or the like. The same holds true when the extraction electrode 8 is installed between the electron beam source 1 and the anode 3. For example, it is recommendable that a voltage of 100 V to 10 kV be applied at an electron density of 1 to 100 mA between the field emitter and the extraction electrode 8 and between the extraction electrode 8 and the anode 3.

The vacuum ultraviolet light emitting device of the present invention emits vacuum ultraviolet light at a wavelength of 200 nm or less. When KMgF$_3$ is used as the metal fluoride, for example, vacuum ultraviolet light with a wavelength of 140 to 200 nm is emitted.

Examples:

Hereinbelow, the present invention will be described concretely by reference to its Examples, but the present invention is in no way limited by these Examples. Moreover, not all of combinations of the features described in the Examples are essential to the means for solution to problems that the present invention adopts.

Example 1

[Formation of metal fluoride thin film on transparent substrate]

A thin film of $KMgF_3$ was prepared on a magnesium fluoride substrate with the use of a pulse laser deposition apparatus. The substrate used was magnesium fluoride ($MgF_2$) with a diameter of 25.4 mm and a thickness of 1 mm. A fused solid of $KMgF_3$ (a melt-solidification product of a mixture of KF powder and $MgF_3$ powder (molar ratio = 100:100)) was used as a target. First, the interior of a chamber was brought to a vacuum of about $2.0 \times 10^{-4}$ Pa by use of a rotary pump and an oil diffusion pump. Then, the substrate and the target were shielded from each other with a metal plate so that no film formation would take place. In this state, pulse laser light with a wavelength of 355 nm and a repetition frequency of 10 Hz was directed at the target to strip and remove for 10 minutes a surface layer of the target where adhesion of impurities was likely. Then, the metal plate placed between the substrate and the target was removed, and a film was formed. Film formation was carried out under the following conditions: the distance between the target and the substrate was 4 cm, the deposition time was 240 minutes, the substrate temperature was 400°C, and the amount of energy of laser irradiation per unit area was 15.5 ($J/cm^2$). The amount of energy of laser irradiation per unit area was calculated as $E/\pi D^2/4$ based on the width D of a laser irradiation vestige on the target after laser irradiation, and pulse energy E at the time of experiments. The pulse energy E was calculated from the equation

$$E \ (J) \ = \ P \ (W)/10 \ (Hz)$$

based on average laser power P during the experiments. The film thickness of the metal fluoride thin film prepared under the above film formation conditions was evaluated by observation of a cross-sectional SEM image, and found to be 100 nm.

[Production of device]

Then, the $MgF_2$ substrate, the $KMgF_3$ thin film, a slit-shaped copper plate anode with a plate thickness of 0.05 mm (0.1 mm wide electrodes arranged with 0.1 mm spacing), a Teflon spacer with a plate thickness of 0.1 mm, and a carbon nanofiber field emitter were disposed in this order downward from above, and these members were held in a Teflon plate and fixed there. This assembly was sealed up in a vacuum container having $MgF_2$ as a window member (3 mm thick), and the degree of vacuum was set at $4 \times 10^{-4}$ Pa or less, whereby a vacuum ultraviolet light emitting device was obtained.

[Luminescence characteristics of device]

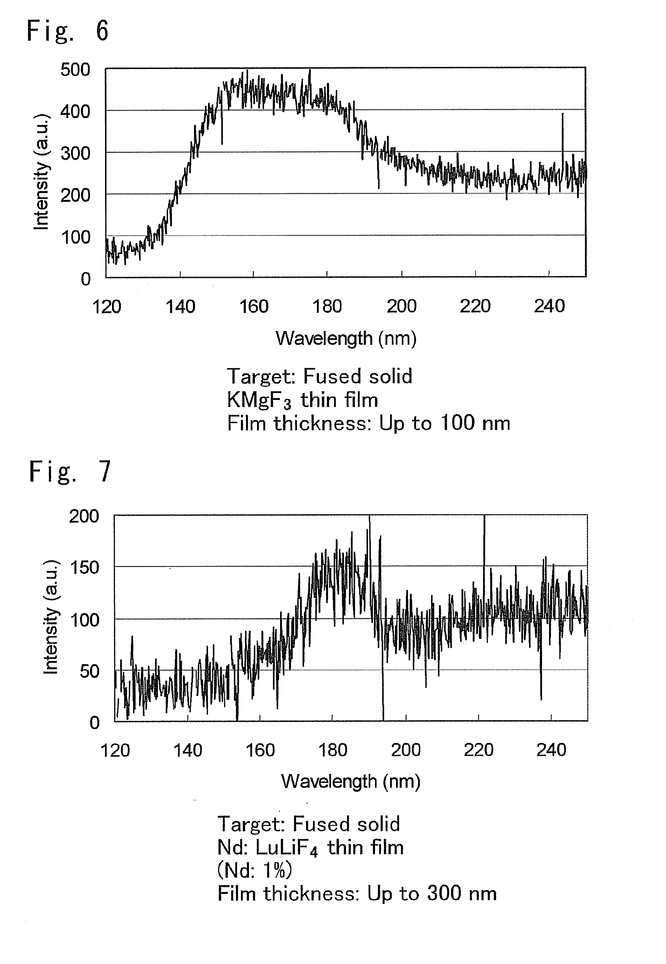

The so produced vacuum ultraviolet light emitting device was connected to an electrometer. Keithley Electrometer Model 6517 was used as the electrometer. A voltage of 850 V was applied to the vacuum ultraviolet light emitting device from a power supply incorporating the electrometer, and a vacuum ultraviolet emission spectrum was measured. Luminescence from the vacuum ultraviolet light emitting device was spectrally analyzed by an emission spectroscope (KV201 type extreme ultraviolet spectroscope produced by BUNKOUKEIKI Co., Ltd.). The wavelengths of the spectrum by the emission spectroscope were swept in the range of 120 to 250 nm, and the emission intensities at the respective emission wavelengths were recorded using a charge coupled device detector. The emission spectrum obtained is shown in Fig. 6.

Example 2

[Formation of metal fluoride thin film on transparent substrate]

A thin film of $Nd:LuLiF_4$ was prepared on a magnesium fluoride substrate in the same manner as in Example 1, except that a fused solid of $Nd:LuLiF_4$ (a melt-solidification product of a mixture of $NdF_3$ powder, $LuF_3$ powder, and LiF powder (molar ratio = 1:100:100)) was used as a target. The film thickness was 300 nm.

[Production of device]

A vacuum ultraviolet light emitting device was produced in the same manner as in Example 1.

[Luminescence characteristics of device]

The emission spectrumof the resultingvacuumultraviolet light emitting device was measured in the same manner as in Example 1. The emission spectrum obtained is shown in Fig. 7.

Example 3

[Formation of metal fluoride thin film on transparent substrate]

A thin film of $Nd: LuF_3$ was prepared on a magnesium fluoride substrate in the same manner as in Example 1, except that a fused solid of $Nd:LuF_3$ (a melt-solidification product of a mixture of $NdF_3$ powder and $LuF_3$ powder (molar ratio = 10:90)) was used as a-target, and the deposition time at the time of film formation was set at 960 minutes. The film thickness was 200 nm.

[Production of device]

Then, the MgF$_2$ substrate, the Nd:LuF$_3$ thin film, a slit-shaped copper plate anode with a plate thickness of 0.5 mm (0.1 mm wide electrodes arranged with 0.1 mm spacing), a Teflon spacer with a plate thickness of 1 mm, a slit-shaped copper plate extraction electrode with a plate thickness of 0.5 mm (0.1 mm wide electrodes arranged with 0.1 mm spacing), a Teflon spacer with a plate thickness of 0.1 mm, and a carbon nanofiber field emitter were disposed in this order downward from above, and these members were held in a Teflon plate and fixed there. This assembly was sealed up in a vacuum container having MgF$_2$ as a window member (3 mm thick), and the degree of vacuum was set at $1 \times 10^{-4}$ Pa or less, whereby a vacuum ultraviolet light emitting device was obtained.

[Luminescence characteristics of device]

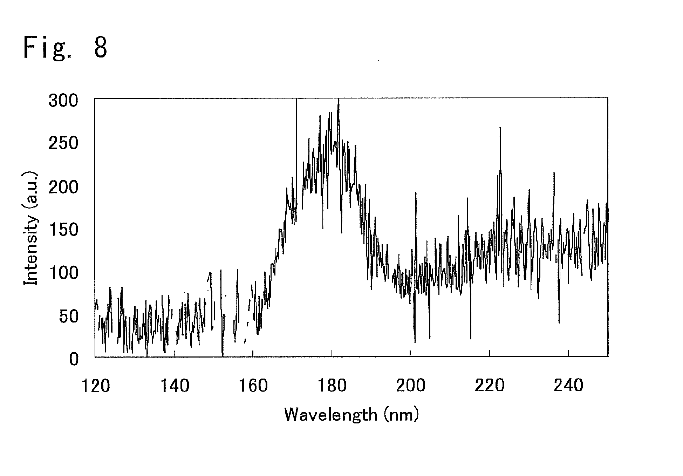

The so produced vacuum ultraviolet light emitting device was connected to two constant-voltage power supplies. HAR-20R15 and HARb-3R20 were used as the two constant-voltage power supplies. A voltage of 650 V was applied to the extraction electrode from the constant-voltage power supply (HAR-20R15), while a voltage of 3000 V was applied to the accelerating electrode from the constant-voltage power supply (HARb-3R20), and a vacuum ultraviolet emission spectrum was measured. Luminescence from the vacuum ultraviolet light emitting device was spectrally analyzed by an emission spectroscope (KV201 type extreme ultraviolet spectroscope produced by BUNKOUKEIKI Co., Ltd.). The wavelengths of the spectral components by the emission spectroscope were swept in the range of 120 to 250 nm, and the emission intensities at the respective emission wavelengths were recorded using a charge coupled device detector. The emission spectrum obtained is shown in Fig. 8.

Explanations of Letters or Numerals:

1    Electron beam source

2    Spacer

3    Anode

4    Metal fluoride thin-film layer

5    Transparent substrate

6    Vacuum container

7    Window member

8    Extraction electrode

9    Laser light source

10    Target

**Claims**

1.  A vacuum ultraviolet light emitting device, comprising:

    a luminescence substrate; and
    an electron beam source,
    the luminescence substrate being composed of a transparent substrate and a metal fluoride thin-film layer formed on the transparent substrate,
    wherein the luminescence substrate and the electron beam source are disposed in a vacuum atmosphere, and
    the metal fluoride thin-film layer is irradiated with electron beams from the electron beam source to emit light including wavelength components of vacuum ultraviolet light.

2.  The vacuum ultraviolet light emitting device according to claim 1, wherein
    an extraction electrode is installed between the electron beam source and an anode.

3.  The vacuum ultraviolet light emitting device according to claim 1, wherein
    the metal fluoride thin-film layer is a thin-film layer composed of a metal fluoride containing atoms of at least one metal selected from the group consisting of neodymium (Nd), thulium (Tm) and erbium (Er).

**Amended claims under Art. 19.1 PCT**

**1.** A vacuum ultraviolet light emitting device, comprising:

    a luminescence substrate;
    an anode; and
    an electron beam source,
    the luminescence substrate being composed of a transparent substrate and a metal fluoride thin-film layer formed on the transparent substrate,
    wherein the luminescence substrate, the anode, and the electron beam source are disposed in a vacuum atmosphere in the order of the electron beam source, the anode, the metal fluoride thin-film layer, and the transparent substrate, and
    the metal fluoride thin-film layer is irradiated with electron beams from the electron beam source to emit light including wavelength components of vacuum ultraviolet light.

**2.** The vacuum ultraviolet light emitting device according to claim 1, wherein
an extraction electrode is installed between the electron beam source and the anode.

**3.** The vacuum ultraviolet light emitting device according to claim 1, wherein
the metal fluoride thin-film layer is a thin-film layer composed of a metal fluoride containing atoms of at least one metal selected from the group consisting of neodymium (Nd), thulium (Tm) and erbium (Er).

Fig. 1

Fig. 2

Fig. 3

Fig. 4

Fig. 5

Vacuum evacuation apparatus

Lens

10

9

Vacuum gauge

## Fig. 6

Target: Fused solid
$KMgF_3$ thin film
Film thickness: Up to 100 nm

## Fig. 7

Target: Fused solid
Nd: $LuLiF_4$ thin film
(Nd: 1%)
Film thickness: Up to 300 nm

Fig. 8

<table>
<tr><td colspan="2" align="center"><b>INTERNATIONAL SEARCH REPORT</b></td><td>International application No.<br>PCT/JP2010/065214</td></tr>
</table>

| A.   CLASSIFICATION OF SUBJECT MATTER |
|---|
| *H01J63/06*(2006.01)i, *H01J61/44*(2006.01)i |

According to International Patent Classification (IPC) or to both national classification and IPC

| B.   FIELDS SEARCHED |
|---|

Minimum documentation searched (classification system followed by classification symbols)
H01J63/06, H01J61/44, C09K11/61

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus(JDreamII), JST7580(JDreamII)

| C.   DOCUMENTS CONSIDERED TO BE RELEVANT | | |
|---|---|---|
| Category* | Citation of document, with indication, where appropriate, of the relevant passages | Relevant to claim No. |
| A | JP 2006-79873 A  (Independent Administrative Institution National Institute for Materials Science), 23 March 2006 (23.03.2006), entire text; all drawings & EP 1686202 A1              & US 2006/0185577 A1 & US 2010/0091803 A       & WO 2005/049898 A1 | 1-3 |
| A | JP 2007-294698 A  (Sumitomo Electric Industries, Ltd.), 08 November 2007 (08.11.2007), paragraph [0016]; fig. 1 (Family: none) | 1-3 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 September, 2010 (30.09.10) | Date of mailing of the international search report<br>12 October, 2010 (12.10.10) |
|---|---|
| Name and mailing address of the ISA/<br>Japanese Patent Office | Authorized officer |
| Facsimile No. | Telephone No. |

**INTERNATIONAL SEARCH REPORT**

<table>
<tr><td>International application No.</td></tr>
<tr><td>PCT/JP2010/065214</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 6-89075 A  (Matsushita Electric Industrial Co., Ltd.), 29 March 1994 (29.03.1994), paragraphs [0071] to [0072] & EP 587145 A2 | 1-3 |
| A | WO 2009/031584 A1  (Kobe University), 12 March 2009 (12.03.2009), paragraphs [0009], [0015] to [0017], [0022]; fig. 1, 4 (Family: none) | 1-3 |
| A | JP 2006-190541 A  (Dialight Japan Co., Ltd.), 20 July 2006 (20.07.2006), entire text; all drawings (Family: none) | 1-3 |
| P,A | Shuji MAEO, Noriaki KAWAGUCHI, Takayuki YANAGITA, Yuui YOKOTA, Kentaro FUKUDA, Akira YOSHIKAWA, "KMgF$_3$ Kessho no Shinku Shigaisen Hakko Tokusei", Association for Condensed Matter Photophysics Ronbunshu, 11 December 2009 (11.12.2009), vol.20th, pages 445 to 448 | 1-3 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005228886 A


**Non-patent literature cited in the description**

- **Y. SUZUKI et al.** Hybrid time-resolved spectroscopic system for evaluating laser material using a table-top-sized, low-jitter, 3-MeV picoseconds electron-beam source with a photocathode. *Applied Physics Letters,* 2002, vol. 80, 3280-3282